Europäisches Patentamt

European Patent Office

Office européen des brevets

Veröffentlichungsnummer: **0 275 985**
**A2**

# EUROPÄISCHE PATENTANMELDUNG

Anmeldenummer: **88100749.6**

Int. Cl.⁴ **B62D 11/08**

Anmeldetag: **20.01.88**

Priorität: **23.01.87 DE 3701958**

Veröffentlichungstag der Anmeldung:
**27.07.88 Patentblatt 88/30**

Benannte Vertragsstaaten:
**DE FR GB IT**

Anmelder: **Klöckner-Humboldt-Deutz**
**Aktiengesellschaft**
**Deutz-Mülheimer-Strasse 111 Postfach 80 05**
**09**
**D-5000 Köln 80(DE)**

Erfinder: **Hellenbrand, Ferdinand, Dipl.-Ing.**
**Sandkaule 40**
**D 5205 Sankt Augustin 1(DE)**

Lenkbremsanlage für Schlepper.

Lenkbremsanlage für Schlepper mit einem elektrischen Wechselventil (12) in der Bremsleitung (14) zum Umschalten von einem normalen Bremsvorgang auf Lenkbremsung, wobei zwei bei Lenkeinschlägen der Vorderräder nach rechts bzw. links betätigte elektrische Schaltkontakte (3, 4) mit elektrischen Stellglieder (9, 10) des Wechselventils in Verbindung stehen.

EP 0 275 985 A2

# Lenkbremsanlage für Schlepper

Die Erfindung bezieht sich auf eine Lenkbremsanlage für Schlepper mit hydraulisch arbeitenden Bremsen, insbesondere der hinteren Treibräder, wobei die Versorgung der Bremsen mit Bremsflüssigkeit durch einen oder mehrere pedalbetätigte Geberzylinder erfolgt, der bzw. die wahlweise mit dem Bremszylinder des rechten und oder linken Treibrades verbindbar sind.

Es ist aus der DE-OS 14 80 204 Eine Bremseinrichtung für hydraulisch bremsbare Schlepper bekannt geworden, für die zwei nebeneinander angeordnete Bremspedale vorgesehen sind. Die beiden Bremspedale stehen betätigungsmäßig mit einem Geberzylinder für Bremsflüssigkeit und je einem diesem hydraulisch nachgeschalteten Ventil zur Versorgung der Bremszylinder der Hinterräder sowie außerdem mit einem gemeinsamen Ventil zur Versorgung der Zylinder der Vorderräder mit Bremsflüssigkeit in Verbindung. Bei Einzelbetätigung der Bremspedale wird dabei lediglich der diesem zugeordnete Bremszylinder des entsprechenden Hinterrades mit Bremsflüssigkeit beaufschlagt, so daß Lenkbremsung erfolgt. Für die Allradbremsung müssen beide Bremspedale zur gemeinsamen Betätigung miteinander gekoppelt werden, was in umständlicher Weise durch das Schwenken eines unmittelbar an den Pedalen angeordneten Riegels erfolgt. Nachteilig ist auch, daß man den Riegel insbesondere bei ungünstiger Beleuchtung nicht erkennen kann, was ebenso zu Fehlschaltungen führen kann, wie das Vorhandensein zweier verwechselbarer Bremspedale.

Es ist ferner auch vorgeschlagen worden, für eine Brems-und Lenkbremsanlage lediglich ein Pedal zu verwenden, wobei zur Lenkbremsung die jeweils nicht benötigte Bremse von Hand abgeschaltet wird. Dies ist jedoch umständlich und kam ebenfalls zu Fehlschaltungen führen.

Der Erfindung liegt die Aufgabe zugrunde, zur Vermeidung der genannten Nachteile eine Lenkbremsanlage der eingangs umrissenen Gattung zu schaffen, bei der unter Verwendung nur eines Bremspedals die Einleitung eines Lenkbremsvorganges selbsttätig erfolgt.

Die Aufgabe wird erfindungsgemäß dadurch gelöst, daß an einem abhängig vom Lenkeinschlag der Vorderräder nach links oder rechts bewegten Teil der Lenkung zwei elektrische Schaltkontakte betätigbar sind, so daß diese bei Geradeausfahrt geöffnet und bei Kurvenfahrt je nach Richtung wechselweise geschlossen sind und daß die Schaltkontakte mit elektrischen Stellgliedern eines in den Bremsleitungen der hinteren Treibräder angeordneten Ventils in Verbindung stehen, das somit bei Geradeausfahrt geöffnet ist und bei einem Lenkanschlag die eine oder andere Bremsleitung sperrt.

Durch die Anwendung dieser Merkmale bei einer Lenkbremsanlage wird erreicht, daß ein Lenkbremsvorgang jeweils selbsttätig bei Kurvenfahrt eingeleitet wird, wobei Fehlbetätigungen weitgehend ausgeschlossen sind.

In Weiterbildung der Erfindung ist vorgesehen, daß die beiden Schaltkontakte an Teilen des Lenkzylinders der Vorderachse angreifen. Dabei ist es zweckdienlich, wenn die elektrischen Schaltkontakte am Lenkzylinder als Reedkontakte ausgebildet sind.

Bei Lenkbremsanlagen genannter Art ist es vorteilhaft, wenn das mit den Schaltkontakten verbundene Ventil zum Sperren bzw. zur Freigabe der Bremsleitungen als elektrisch betätigtes Wechselventil ausgebildet ist.

Ferner ist aus Gründen der Sicherheit vorgesehen, daß die beiden Schaltkontakte am Lenkzylinder o. dergl. durch einen am Fahrerstand angeordneten dritten Schalter gemeinsam abschaltbar sind.

Schließlich ist auch die Möglichkeit gegeben, daß die beiden abhängig vom Lenkeinschlag betätigten Schaltkontakte der Vorderachse als Geber für Impulse zum Betätigen einer Differentilsperre dienen.

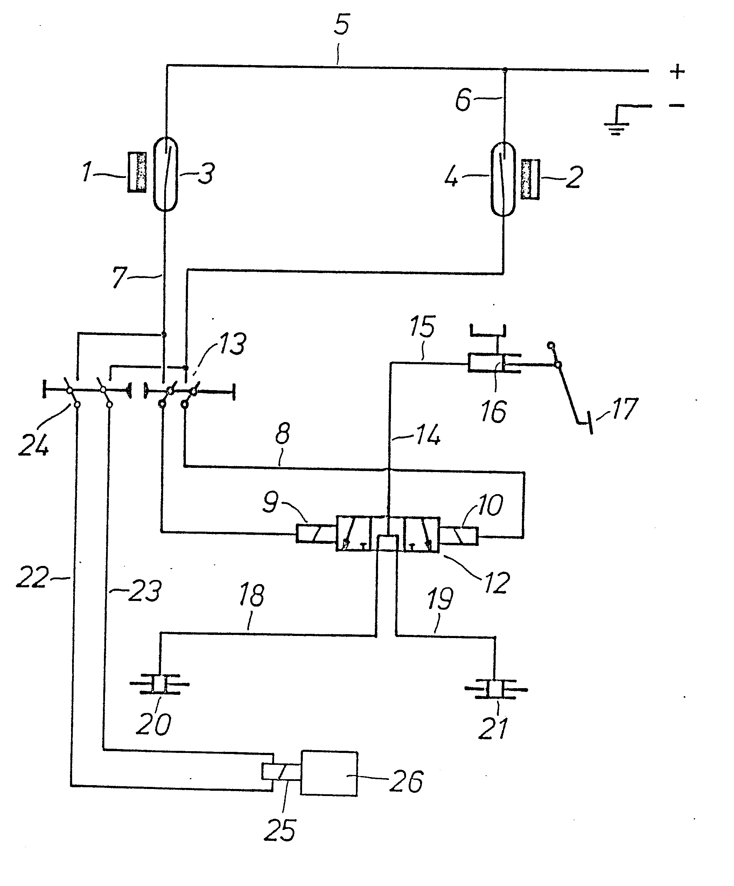

Ein Ausführungsbeispiel der Erfindung wird im folgenden anhand der Zeichnung näher beschrieben. Die einzige Abbildung zeigt schematisch eine Schaltung für eine Lenkbremsanlage gemäß der Erfindung.

Die dargestellte Lenkbremsanlage ist Bestandteil eines Schleppers, der hier der Einfach halber nicht abgebildet ist. Im Bereich der Vorderachse des Schleppers ist beiderseits an je einem bei Lenkeinschlägen der Vorderräder nach rechts bzw. links bewegten Teil der Lenkung ein Permanentmagnet 1 bzw. 2 befestigt. Als Halter für die Magnete 1 und 2 sind solche Teile der Lenkung gewählt, die bei ihren Bewegungen nach rechts bzw. link jeweils gleiche Wege zurücklegen. Im Schwenkbereich der Magnete 1, 2 sind an fahrzeugfesten Teilen Reedkontakte 3, 4 befestigt, die durch Magnetkraft im Schließsinn betätigt werden. Dabei ist die Anordnung der Magnete 1, 2 und der Reedkontakte 3, 4 zueinander so getroffen, daß bei einem Lenkeinschlag der Vorderräder nach links der Reedkontakt 3 durch die Kraft des Magneten 1 geschlossen wird, während bei einem Lenkeinschlag der Vorderrädes nach rechts der Reedkontakt 4 durch die Kraft des Magneten 2 im Schließsinn beeinflußt wird. Bei Geradeausfahrt sind dagegen beide Magnete 1 und 2 außer Wirkung, so daß sich demgemäß beide Reedkontakte 3 und 4 in geöffneter Stellung befinden. Zur Versorgung der Anlage mit elektrischer Energie sind die beiden Reedkontakte 3. 4 einerseits mittels Leitungen 5. 6 gemeinsam an den Pluspol einer Stromquelle angeschlossen. Von den elektrisch parallel geschalteten Reedkontakten 3. 4 führen andererseits zwei Leitungen 7. 8 zu elektromagnetischen Stellgliedern 9. 10 einem Wechselventils 12. In die beiden elektrischen Leitungen 7 und 8 ist ein Schalter 13 eingebaut. der eine Unterbrechung des Stromflusses zwischen den Reedkontakten 3. 4 und dem Wechselventil 12 ermöglicht und der gut erreichbar am Fahrerstand angeordnet ist. Das Wechselventil 12 ist eingangsseitig mittels einer Leitung 14 an einen Geberzylinder 15 für Bremsflüssigkeit angeschlossen. Zur Betätigung eines Kolbens 16 im Geberzylinder 15 dient ein Pedal 17. Vom Wechselventil 12 führen ausgangsseitig zwei Leitungen 18, 19 zu je einem Bremszylinder 20 bzw. 21 an den nicht gezeigten hinteren Treibrädern des Schleppers. Das Wechselventil 12 hat neben der gezeigten mittleren Schaltstellung noch zwei andere Schaltstellungen, in denen der Geberzylinder 15 mit dem einen oder anderen Bremszylinder 20 bzw. 21 verbindbar ist.

Bei der gezeigten Stellung des Schalters 13 sind die beiden Stellglieder 9. 10 des Wechselventils 12 stromlos und dieses nimmt infolge Mittelzentrierung die dargestellte Mittellage ein. Damit erfolgt bei Betätigung des Pedals 17 durch gleichzeitige Beaufschlagung beider Bremszylinder 20, 21 mit Druckflüssigkeit ein normaler Bremsvorgang. Soll dagegen Lenkbremsung erfolgen, dann wird der Schalter 13 geschlossen. Bei Lenkeinschlägen der Vorderräder nach rechts bzw. links wird jeweils der eine bzw. andere Reedkontakt 3 bzw. 4 durch die einwirkende Kraft des entsprechenden Magneten 1 bzw. 2 geschlossen, so daß das Stellglied 9 bzw. 10 erregt wird und das Wechselventil 12 aus der Mittellage in die rechts bzw. linke Schaltstellung verschiebt. Somit erfolgen bei Betätigung des Pedals 17 durch Beaufschlagung nur eines der beiden Bremszylinder 20 oder 21 mit Druckflüssigkeit Lenkbremsung.

Wie ferner aus der Abbildung ersichtlich zweigen von den beiden elektrischen Leitungen 7 und 8 zwei Leitungen 22 bzw. 23 ab. die über einen Schalter 24 zu einem elektrischen Stellglied 25 einem Differentialsperre 26 führen. Bei geschlossenem Schalte 24 werden die beiden Reedkon auf diese Weise zum Ansteuern der Differential sperre. Die beiden Schalter 13 und 24 sind so miteinander gekoppelt, daß das Einschalten der Differentialsperre 26 nur bei normaler Bremsbetätigung (Schalter 13 geöffnet) möglich ist.

## Ansprüche

1. Brems-und Lenkbremsanlage für Schlepper mit hydraulisch arbeitenden Bremsen insbesondere der hinteren Treibräder, wobei die Versorgung der Bremsen mit Bremsflüssigkeit durch einem oder mehrere pedalbetätigte Geberzylinder (15) erfolgt, der bzw. die je nach gewünschter Bremsart wahlweise mit dem Bremszylinder (20 bzw. 21) des rechten und oder linken Treibrades verbindbar sind. dadurch gekennzeichnet, daß von zumindest einem abhängig vom Lenkeinschlag der Vorderräder nach links oder rechts bewegten Teil (1, 2) der Lenkung zwei elektrische Schaltkontakte (3, 4) betätigbar sind, so daß diese bei Geradeausfahrt geöffnet und bei Kurvenfahrt je nach Richtung wechselweise geschlossen sind und daß die Schaltkontakte (3, 4) mit elektrischen Stellgliedern (9, 10) eines in den Bremsleitungen (14, 18, 19) der hinteren Treibräder angeordneten Ventils (12) in Verbindung stehen, das somit bei Geradeausfahrt geöffnet ist und bei einem Lenkeinschlag die eine oder andere Bremsleitung (20 bzw. 21) sperrt.

2. Lenkbremse nach Anspruch 1, dadurch gekennzeichnet, daß die beiden Schaltkontakte (3. 4) an Teilen des Lenkzylinders der Vorderachse angreifen.

3. Lenkbremse nach den Ansprüchen 1 und 2, dadurch gekennzeichnet, daß die elektrischen Schaltkontakte am Lenkzylinder als Reedkontakte (3, 4) ausgebildet sind.

4. Lenkbremse nach einem der vorhergehenden Ansprüche, dadurch gekennzeichnet, daß das mit den Schaltkontakten (3, 4) verbundene Ventil zum Sperren bzw. zur Freigabe der Bremsleitungen (20, 21) als elektrisch betätigtes Wechselventil (12) ausgebildet ist.

5. Lenkbremse nach einem der vorhergehenden Ansprüche, dadurch gekennzeichnet, daß die beiden Schaltkontakte (3, 4) am Lenkzylinder durch einen am Fahrerstand angeordneten dritten Schalter (13) gemeinsam abschaltbar sind.

6. Lenkbremse nach einem der vorhergehenden Ansprüche, dadurch gekennzeichnet, daß die beiden Schaltkontakte (3, 4) am Lenkzylinder o. dergl. der Vorderachse als Geber für Impulse zum Betätigen einer Differentialsperre (26) dienen.

0 275 985